# EUROPEAN PATENT APPLICATION

(11) **EP 4 242 984 A1**
(43) Date of publication of application: **13.09.2023**
(21) Application number: 23157248.8
(22) Date of filing: 17.02.2023
(51) Int. Cl.: G06V 10/82, G06V 10/774, G06V 10/80, G06V 20/70

(54) **OBJECT DETECTION DEVICE AND METHOD**

(30) Priority: 11.03.2022 JP 2022038610
(71) Applicant: FUJITSU LIMITED, Kawasaki-shi, Kanagawa 211-8588 (JP)
(72) Inventor: Yamada, Moyuru, Kawasaki-shi, Kanagawa, 211-8588 (JP)
(74) Representative: Hoffmann Eitle

(57) **Abstract**

An object detection device includes a processor that executes a procedure. The procedure includes: converting an input image into a first vector such that information related to an area of an object in the image is contained in the first vector; converting input text into a second vector such that information related to an order of appearance in the text of one or more word strings each indicating a detection target object included in the text is contained in the second vector; generating a third vector in which the first vector and the second vector have been reflected in a vector of initial values corresponding to detection target objects; and estimating whether or not a feature indicated by the third vector corresponds to a detection target object that appears at which number place in the text, and estimating a position of the detection target object in the image.

## Description

### FIELD

The embodiments discussed herein are related to a non-transitory storage medium stored with an object detection program, an object detection device, and an object detection method.

### BACKGROUND

Hitherto there has been technology for estimating a position of a detection target object in an input image, and for also estimating a category of the detected object in cases in which plural categories of detection target object are defined. Such object detection is normally implemented by preparing in advance images, and plural sets of paired data configured from a position and a correct category of a detection target object for the images, and subjecting an object detector, such as a neural network or the like, to machine learning based on the paired data. However, when adopting such an approach there is a need to pre-define the categories of detection target object when performing machine learning. This means that when there is a desire to have an object of a category not defined when performing machine learning as a detection target, there is a need to prepare paired data for such a category, and then perform re-training of the object detector therewith.

There is a proposal for technology to address such a problem by using images and text describing the images to detect an object from the text in the images. In such technology both an image and a text are input to an encoder, and a decoder is provided with features extracted from the image utilizing information of the text and an initial value of a token. In such technology, a position in an image of each object corresponding to each element of the token output from the decoder is estimated, and whether each object corresponds to which location of text is estimated.

### Related Non-Patent Documents

Aishwarya Kamath, Mannat Singh, Yann LeCun, Gabriel Synnaeve, Ishan Misra, Nicolas Carion, "MDETR -- Modulated Detection for End-to-End Multi-Modal Understanding", arXiv:2104.12763, 26 April 2021.

However, there is an issue with the above technology for object detection using images and text in that the processing in an encoder to extract features from images using text information, namely processing to merge images and text, has a massive computational load.

### SUMMARY

An object of an aspect of technology disclosed herein is to reduce the computational load for detecting objects designated by text in images without pre-defining categories of detection target object.

According to an aspect of the embodiments, a non-transitory recording medium stores a program that causes a computer to execute a process. The process includes: converting an input image into a first vector such that information related to an area of an object in the image is contained in the first vector; converting input text into a second vector such that information related to an order of appearance in the text of one or more word strings each indicating a detection target object included in the text is contained in the second vector; generating a third vector in which the first vector and the second vector have been reflected in a vector of initial values corresponding to detection target objects; and estimating whether or not a feature indicated by the third vector corresponds to a detection target object that appears at which number place in the text, and estimating a position of the detection target object in the image.

### BRIEF DESCRIPTION OF DRAWINGS

Fig. 1 is a diagram to explain an outline of object detection in an object detection device of an exemplary embodiment.
Fig. 2 is a functional block diagram of an object detection device.
Fig. 3 is a diagram to explain processing of a compression section.
Fig. 4 is a diagram to explain processing of an image analysis section.
Fig. 5 is a diagram to explain processing of a text analysis section.
Fig. 6 is a diagram to explain processing of an area feature extraction section.
Fig. 7 is a diagram to explain processing of an area feature extraction section.
Fig. 8 is a diagram to explain processing of a correspondence estimation section and a position estimation section.
Fig. 9 is a diagram illustrating an example of a detection result image.
Fig. 10 is a diagram illustrating an example of a training sample.
Fig. 11 is a block diagram illustrating a schematic configuration of a computer that functions as an object detection device.
Fig. 12 is a flowchart illustrating an example of training processing.
Fig. 13 is a flowchart illustrating an example of detection processing.
Fig. 14 is a diagram to explain a computational load reduction effect.

### DESCRIPTION OF EMBODIMENTS

Explanation follows regarding an example of an exemplary embodiment according to technology disclosed herein, with reference to the drawings.

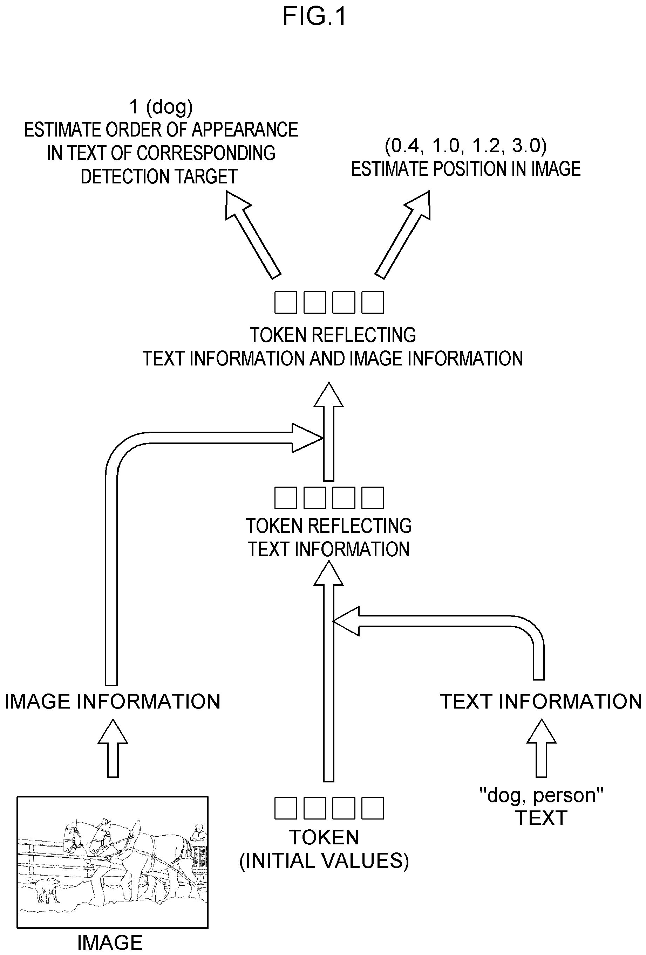

First description follows regarding an outline of object detection of an object detection device of the present exemplary embodiment, with reference to Fig. 1.

As illustrated in Fig. 1, the object detection device is input with images, and text containing a word string indicating a detection target object. The object detection device separately executes both processing to analyze an image and extract image information indicating features of the image, and processing to analyze text and extract text information indicating features of the text. The object detection device merges the image information and the text information using a token. In this merging processing the object detection device separates a phase to reflect the text information in the token, and a phase to reflect the image information in the token. The object detection device then uses the token reflecting the image information and the text information to estimate whether there is a correspondence between an object in an image and a detection target object appearing at which number place in the text, and also to estimate a position of the object in the image. Detailed explanation follows regarding the object detection device.

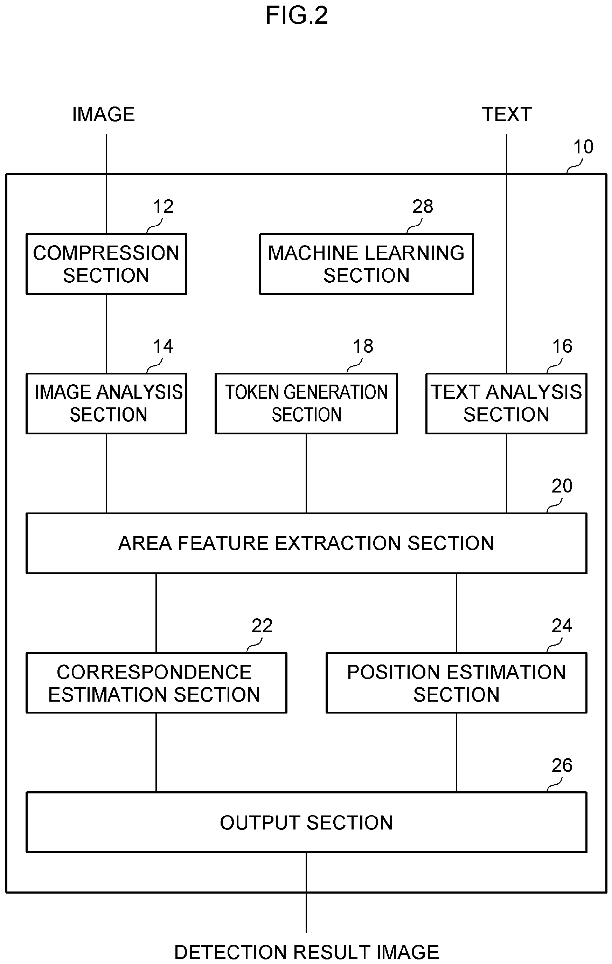

As illustrated in Fig. 2, images, and text designating target objects desired to be detected in the images, are input to an object detection device 10. Hereafter images input during training are called training images, and images input during detecting are called target images, and these are both referred to simply as images when no discrimination is made therebetween in the description. Similarly, text input during training is called training text, and text input during detecting is called target text, and these are both referred to simply as text when no discrimination is made therebetween in the description.

As illustrated in Fig. 2, the object detection device 10 includes, from a functional perspective, a compression section 12, an image analysis section 14, a text analysis section 16, a token generation section 18, an area feature extraction section 20, a correspondence estimation section 22, a position estimation section 24, an output section 26, and a machine learning section 28. The compression section 12 and the image analysis section 14 configure an example of an image analysis section of technology disclosed herein, and the correspondence estimation section 22 and the position estimation section 24 configure an example of an estimation section of technology disclosed herein.

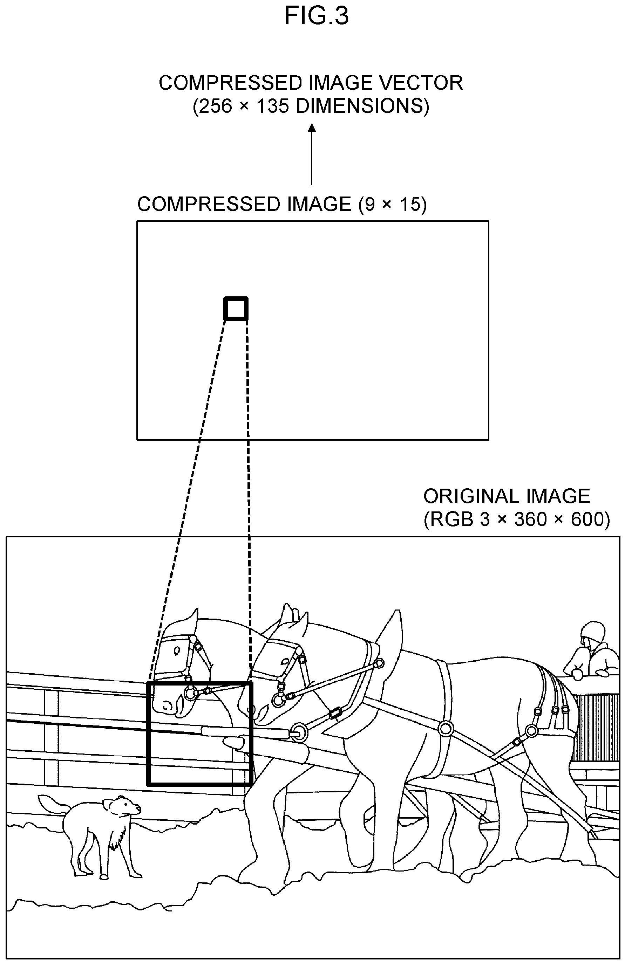

The compression section 12 acquires an image input to the object detection device 10, and generates a compressed image that is a compressed version of the acquired image. The compression section 12 may, for example, employ a network resulting from removing the output layer of a convolutional neural network (CNN) as a compressor to generate a compressed image by inputting an image into the compressor. The compression section 12 also generates a compressed image vector of elements that are feature values held by each pixel of the compressed image. For example as in Fig. 3, the compression section 12 compresses a RGB image (the "original image" in Fig. 3) having 360 × 600 pixels prior to compression so as to generate a 9 × 15 pixel compressed image. The information held by each pixel of the original image is information in three dimensions i.e. RGB, and the information held by each pixel of the compressed image is information expressing image features such as a color distribution or the like, for example in 256 dimensions. The compression section 12 arranges the information for each of the pixels of the compressed image in a single row, and generates a compressed image vector having 256 × 135 dimensions. The compressed image vector is an example of a first intermediate vector of technology disclosed herein.

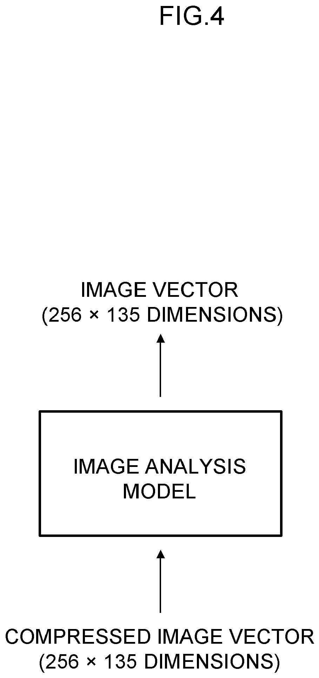

The image analysis section 14 converts the compressed image vector generated by the compression section 12 into an image vector so as to include information related to areas of objects in the input image. The image vector is an example of a first vector of technology disclosed herein. More specifically, as illustrated in Fig. 4, the image analysis section 14 inputs the compressed image vector into an image analysis model pre-generated by machine learning so as to convert compressed image vectors into image vectors, and acquires a vector output from the image analysis model as the image vector. The image vector is a vector having the same dimensionality as the compressed image vector (256 × 135 dimensions in the example of Fig. 4), and is also a vector indicating each of the objects in the image as separable features. For example, values in the image vector enable discrimination between the vector inside an outline of a dog in the image at the vector at other areas. The image analysis model may, for example, be implemented by an encoder of a transformer.

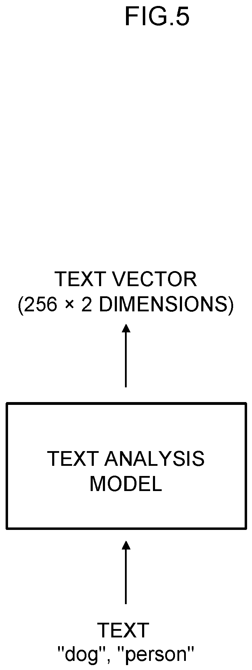

The text analysis section 16 acquires text input to the object detection device 10, and converts the text into a text vector so as to include information related to an order of appearance in the text of detection target objects. The text vector is an example of a second vector of technology disclosed herein. More specifically, the text analysis section 16 identifies a word string indicating a detection target object in the input text. In cases in which the text is in the form of a list, such as the word string illustrated in Fig. 5, the text analysis section 16 identifies each word string as an unmodified word string indicating a detection target object. In cases in which the text is a sentence, the text analysis section 16 extracts word strings of nouns, and adjective-noun combinations, and the like from the sentence, and lists the extracted word strings in their order of appearance in the text. Note that although in the example of Fig. 5 each word string only contains a single word, word strings that contain two or more words, such as "black dog", for example, may be contained therein.

As illustrated in Fig. 5, the text analysis section 16 inputs a word string into a text analysis model generated in advance by machine learning so as to convert word strings into text vectors. The text analysis model may, for example, be implemented by a machine learning model such as a neural network. When input with one or more word string, the text analysis model outputs a text vector in vector space to express features of vocabulary. The text vector includes word string vectors incorporating the feature values of the word strings arrayed in order of appearance in the word string text. In the example of Fig. 5 the vectors that express each word string each have 256 dimensions, and there are two word strings indicating detection target objects contained in the text, and so the text vector is a vector having 256 × 2 dimensions. The text analysis model may, for example, be implemented by an encoder of a transformer.

The token generation section 18 generates a token of initial values held by specific individual elements corresponding to detection target objects. Each of the elements contained in the token corresponds to a respective detection target object, and the token is a vector that serves the role of a container in which to reflect features exhibited by the image vector converted by the image analysis section 14 and features exhibited by the text vector converted by the text analysis section 16. The number of the elements contained in the token is equivalent to the maximum number of objects detectable in images. Specifically, the token generation section 18 sets initial values such that a unique vector is configured by each respective pre-designated number of elements. For example, in cases in which a token of initial values containing four elements is generated, the token generation section 18 allocates the placement numbers 1, 2, 3, and 4 to the respective elements, and then each element is augmented to 256 dimensions. For example, the token generation section 18 generates an initial value token of a vector of [1, 0, ..., 0] for the first place element, a vector of [0, 1, ..., 0] for the second placed element, etc.

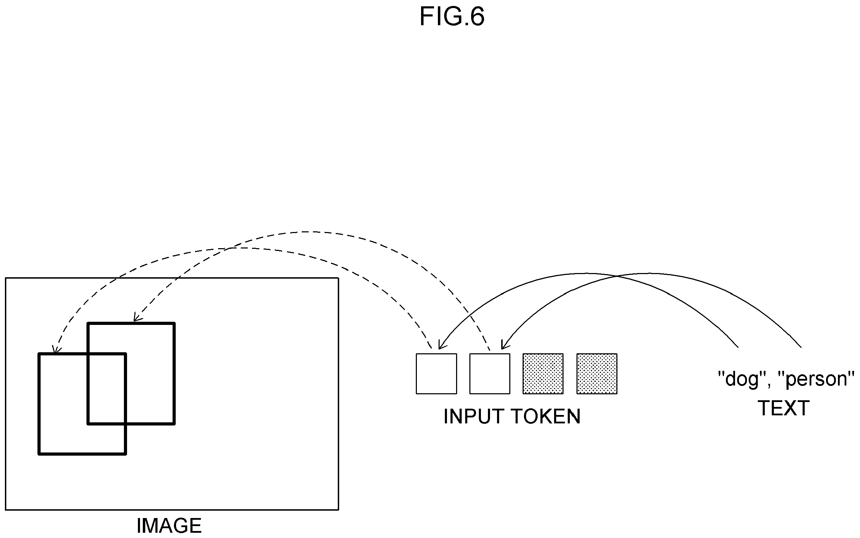

The area feature extraction section 20 generates an area feature token expressing information about each detection target object by updating the token based on the image information and the text information. The area feature token is an example of a third vector of technology disclosed herein. Specifically, the area feature extraction section 20 generates an area feature token in which the image vector is reflected after the text vector has been reflected in the token. More specifically as illustrated in Fig. 6, the area feature extraction section 20 reflects the word string vectors representing each of the word strings contained in the text vector in the respective elements of the token, so as to update to a vector in which each element of the token expresses which information is to be extracted from an image (solid arrows in Fig. 6). The area feature extraction section 20 also extracts information about objects corresponding to the respective elements of the token from the image (broken line arrow illustrated in Fig. 6), and updates the token therewith.

The area feature extraction section 20 also performs mutual correction between elements so that respective elements of the token do not correspond to the same object. Furthermore, in cases in which the number of elements contained in the token is greater than the number of detection targets contained in the text, the area feature extraction section 20 updates elements not corresponding to detection targets (the shaded elements in Fig. 6) so as to express the fact that there is no detection target object present. The area feature extraction section 20 may, for example, be implemented by a decoder of a transformer.

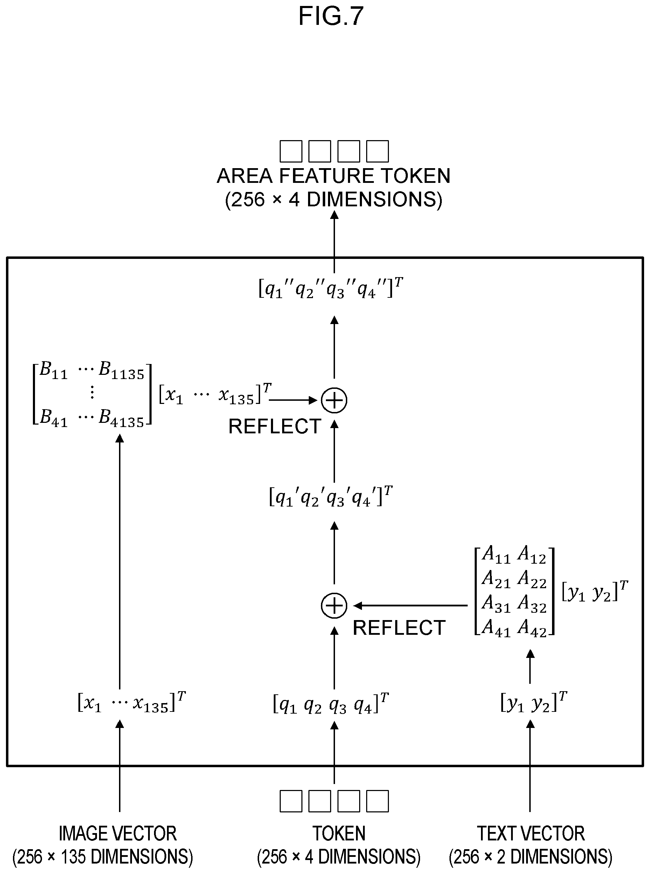

For example, as illustrated in Fig. 7, the area feature extraction section 20 adds to the initial value token a vector product resulting from the text vector being multiplied by a coefficient matrix A computed in advance by machine learning, so as to generate a token corrected with the text vector. The area feature extraction section 20 also adds to the token corrected by the text vector a vector product resulting from multiplying the image vector by a coefficient matrix B computed in advance by machine learning, so as to generate a token corrected by both the text vector and the image vector. The coefficient matrix A and the coefficient matrix B each contain coefficients expressing a degree of correction applied to the token. The area feature extraction section 20 takes the token corrected by both the text vector and the image vector as a new initial value token, repeats the above correction processing a specific number of times, and extracts the final corrected token as the area feature token. Note that the token corrected with the text vector is an example of a second intermediate vector of technology disclosed herein, and the token corrected by the text vector and the image vector is an example of a third intermediate vector of technology disclosed herein.

Note that in Fig. 7, [y₁ y₂]^{T} is an example of a text vector. y₁ is a word string vector expressing a detection target object first placed in the text (dog in the example of Fig. 5), and y₂ is a word string vector expressing a detection target object second placed in the text (person in the example of Fig. 5). [x₁ ... x₁₃₅]^{T} is an example of an image vector. A matrix configured from elements A₁₁ to A₄₂ is an example of the coefficient matrix A, and a matrix configured from elements B₁₁ to B₄₁₃₅ is an example of the coefficient matrix B. [q₁, q₂, q₃, q₄]^{T} is an example of an initial value token, and [q₁', q₂', q₃', q₄']^{T} is an example of a token corrected by the text vector. [q₁", q₂", q₃", q₄"]^{T} is an example of a token corrected by both the text vector and the image vector.

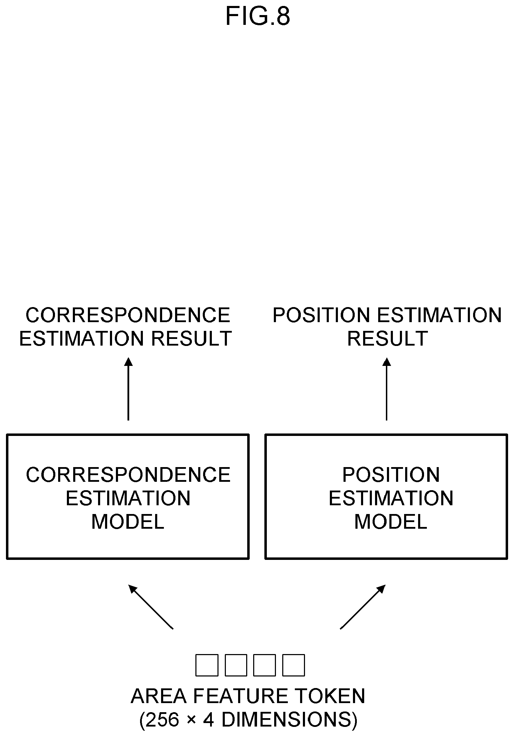

The correspondence estimation section 22 estimates whether a feature expressed by each element of the area feature token extracted by the area feature extraction section 20 corresponds to a detection target object appearing at which number place in the text. Specifically as illustrated in Fig. 8, when input with the area feature token, the correspondence estimation section 22 performs estimation using a correspondence estimation model generated in advance by machine learning so as to output an estimation result as to whether there is a correspondence to the detection target object appearing at which number place in the text. The correspondence estimation model is an example of a first estimation model of technology disclosed herein. The correspondence estimation model may, for example, be implemented by a feedforward neural network (FNN). For example, the correspondence estimation model outputs as a correspondence estimation result a likelihood that a feature expressed by each element in the area feature token corresponds to a respective detection target object, and a likelihood that the each feature corresponds to no detection target object being present.

The position estimation section 24 estimates a position of a detection target object in the image based on the area feature token extracted by the area feature extraction section 20. Specifically as illustrated in Fig. 8, when input with the area feature token, the position estimation section 24 estimates a position of a detection target object using a position estimation model generated in advance by machine learning so as to output a position estimation result of a detection target object. The position estimation model is an example of an second estimation model of technology disclosed herein. The position estimation model may, for example, be implemented by an FNN. For example, consider a case in which the position estimation model outputs, as the position estimation result, a vector (x1, y1, x2, y2) resulting from combining an image coordinate value (x1, y1) of a top left corner of a rectangle circumscribing an area of a detection target object in the image with an image coordinate value (x2, y2) of a bottom right corner thereof. Note that the position estimation result is not limited to such a format and, for example, may be expressed by any identifying coordinate values of a rectangular area, such as a top left corner or a center of a rectangular area and vertical and horizontal sizes thereof. The position estimation model outputs a position estimation result for each element corresponding to one or other detection target object from out of the elements of the area feature token. The position estimation model does not output a position estimation result for elements indicating there to be no detection target object present.

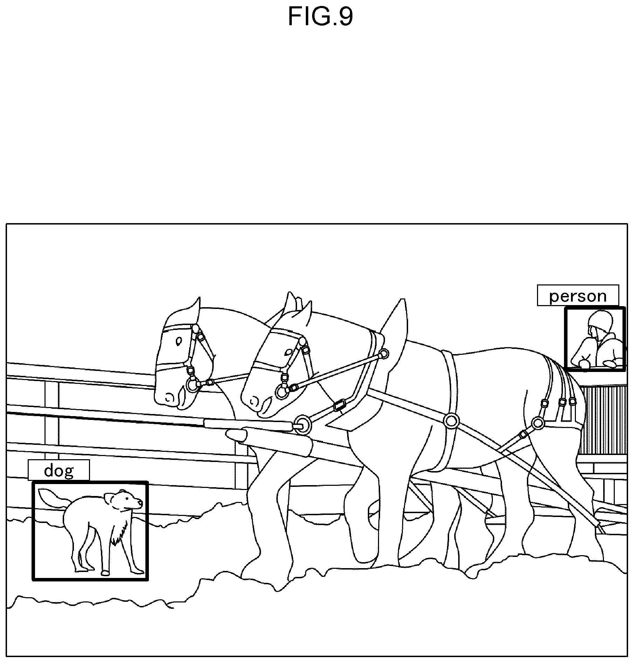

The output section 26 generates and outputs a detection result image in which a detection result is overlaid on a target image based on the correspondence estimation result by the correspondence estimation section 22 and the position estimation result by the position estimation section 24. For example as illustrated in Fig. 9, the output section 26 overlays rectangular boxes respectively indicating the position estimation result of each element of the area feature token on the target image. The output section 26 also overlays the word string that has the maximum likelihood, as indicated by the correspondence estimation result for each element of the area feature token, on the target image depicted together with the rectangular boxes of corresponding elements. Consider, for example, a case in which there are two word strings "dog" and "person" contained in this order in a text, and that the correspondence estimation results for the first placed element in the area feature token is (P(1), P(2), P(3)). P(1) is the likelihood corresponding to the detection target object first placed in the text, P(2) is the likelihood corresponding to the detection target object second placed in the text, and P(3) is the likelihood corresponding to there being no detection target object present. In cases in which P(1) had the maximum likelihood, the output section 26 depicts "dog" overlaid on the rectangular box corresponding to the first placed element.

The machine learning section 28 employs plural training samples when executing machine learning on the compressor, the image analysis model, the text analysis model, the coefficients of the area feature extraction section 20, the correspondence estimation model, and the position estimation model. Note that the compressor and the text analysis model may be excluded from being subjected to machine learning.

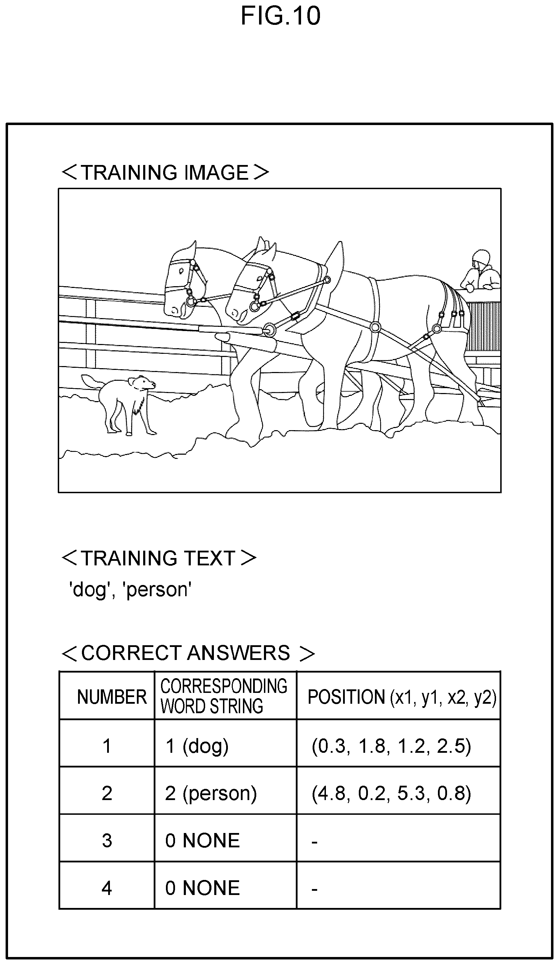

Fig. 10 illustrates an example of a training sample. Each training sample contains a training image, a training text, and correct answers. The number of individual correct answers prepared is the number of elements set in the token. In the example of Fig. 10, four correct answers, Nos. 1 to 4, are prepared corresponding to a token containing four elements, and a correct answer as to whether an object in the training image corresponds to which number placed word string in the text, and a correct answer of a position of this object in the image are associated with each other. The machine learning section 28 employs the training image and the training text and functions as each functional section so as to acquire the correspondence estimation result and the position estimation result, and executes machine learning on each of the models and coefficients so as to minimize an error between the correct answers and the estimation results. Note that positions corresponding to elements indicting that there is no detection target object present are not considered during machine learning.

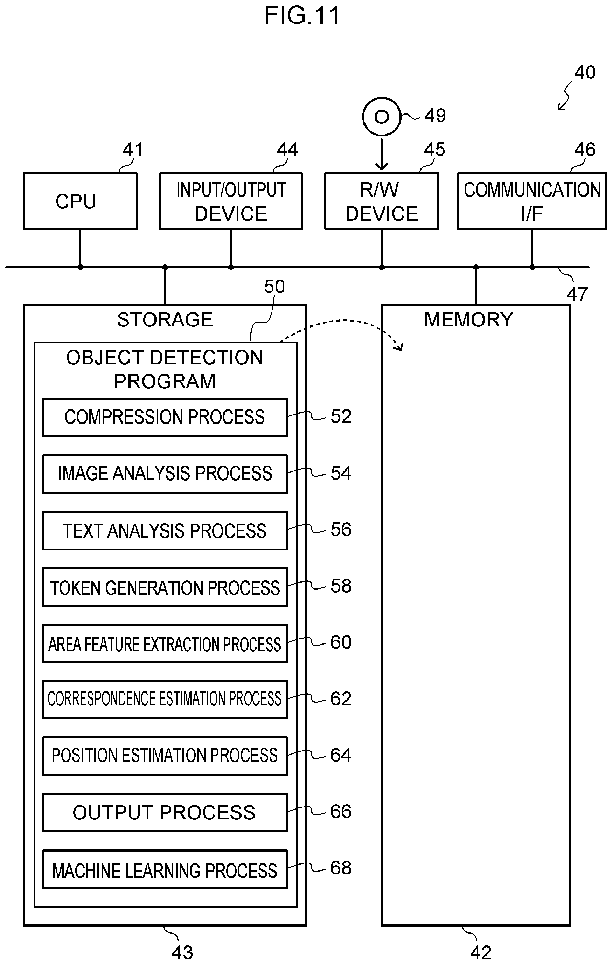

The object detection device 10 may, for example, be implemented by a computer 40 as illustrated in Fig. 11. The computer 40 is equipped with a central processing unit (CPU) 41, memory 42 serving as temporary storage space, and a non-transitory storage section 43. The computer 40 also includes an input/output device 44 such an input section, display section, and the like, and a read/write (R/W) section 45 to control reading data from a storage medium 49 and writing data thereto. The computer 40 also includes a communication interface (I/F) 46 connected to a network such as the Internet. The CPU 41, the memory 42, the storage section 43, the input/output device 44, the R/W section 45, and the communication I/F 46 are mutually connected together through a bus 47.

The storage section 43 may, for example, be implemented by a hard disk drive (HDD), solid state drive (SSD), or flash memory. The storage section 43 serves as a storage medium stored with an object detection program 50 that causes the computer 40 to function as the object detection device 10. The object detection program 50 includes a compression process 52, an image analysis process 54, a text analysis process 56, a token generation process 58, an area feature extraction process 60, a correspondence estimation process 62, a position estimation process 64, an output process 66, and a machine learning process 68.

The CPU 41 reads the object detection program 50 from the storage section 43, expands the object detection program 50 in the memory 42, and sequentially executes the processes included in the object detection program 50. By executing the compression process 52 the CPU 41 acts as the compression section 12 illustrated in Fig. 2. By executing the image analysis process 54 the CPU 41 acts as the image analysis section 14 illustrated in Fig. 2. By executing the text analysis process 56 the CPU 41 acts as the text analysis section 16 illustrated in Fig. 2. By executing the token generation process 58 the CPU 41 acts as the token generation section 18 illustrated in Fig. 2. By executing the area feature extraction process 60 the CPU 41 acts as the area feature extraction section 20 illustrated in Fig. 2. By executing the correspondence estimation process 62 the CPU 41 acts as the correspondence estimation section 22 illustrated in Fig. 2. By executing the position estimation process 64 the CPU 41 acts as the position estimation section 24 illustrated in Fig. 2. By executing the output process 66 the CPU 41 acts as the output section 26 illustrated in Fig. 2. By executing the machine learning process 68 the CPU 41 acts as the machine learning section 28 illustrated in Fig. 2. The computer 40 executing the object detection program 50 accordingly functions as the object detection device 10. Note that the CPU 41 executing the program is hardware.

Note that the functions implemented by the object detection program 50 may also be implemented by, for example, a semiconductor integrated circuit, and more specifically by an application specific integrated circuit (ASIC).

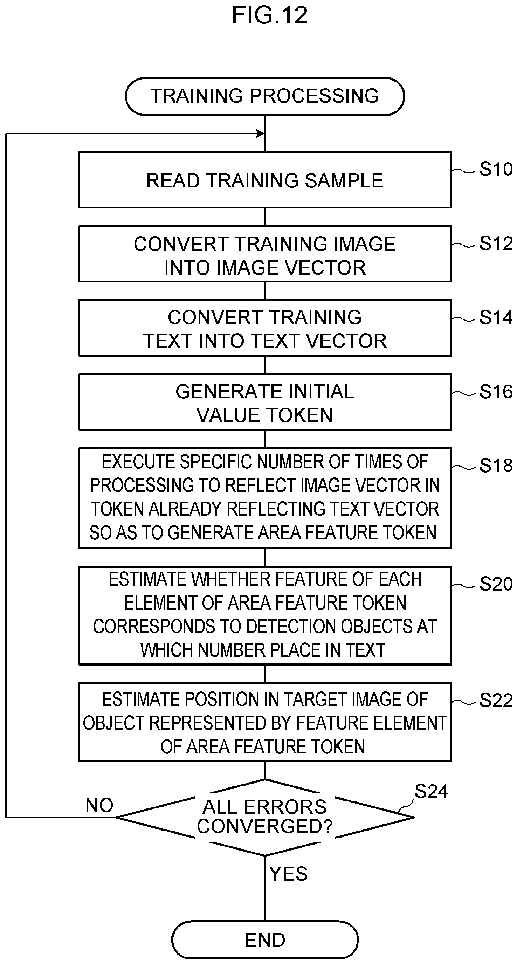

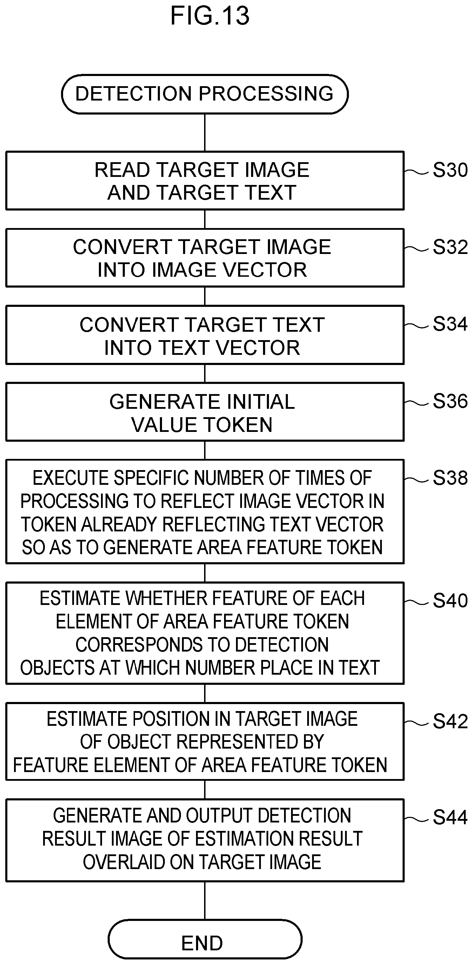

Next, description follows regarding operation of the object detection device 10 according to the present exemplary embodiment. The training processing illustrated in Fig. 12 is executed in the object detection device 10 when the training sample is input to the object detection device 10 and machine learning for each model and coefficient is instructed. The detection processing illustrated in Fig. 13 is executed in the object detection device 10 when a target image and a target text is input to the object detection device 10 and detection of detection target objects in the target image is instructed. Note that the training processing and the detection processing configure an example of an object detection method of technology disclosed herein.

First description follows regarding the training processing illustrated in Fig. 12.

At step S10, the machine learning section 28 reads the training sample. Next, at step S12 the compression section 12 generates compressed image vectors from training images contained in the training sample, and passes these across to the image analysis section 14. The image analysis section 14 uses the image analysis model to convert the compressed image vectors into image vectors.

Next, at step S14 the text analysis section 16 identifies word strings expressing detection target objects in the training text contained in the training sample, and then uses the text analysis model to convert the identified word strings into text vectors. Note that the processing of step S12 may be executed in parallel to the processing of step S 14.

Next, at step S16 the token generation section 18 generates an initial value token having a specific individual number of elements corresponding to the detection target objects. Next, at step S 18 the area feature extraction section 20 reflects the text vector in the token before then reflecting the image vector therein to generate the area feature token.

Next, at step S20 the correspondence estimation section 22 estimates whether a feature indicated by each element of the area feature token generated as step S18 corresponds to a detection target object appearing at which number place in the text. Next, at step S22 the position estimation section 24 estimates positions of detection target objects in the image based on the area feature token generated at step S 18.

Next, at step S24 the machine learning section 28 executes machine learning on each model and coefficient so as to minimize error between the estimation results obtained at step S20 and step S22, and the correct answers contained in the training sample. The machine learning section 28 then determines whether or not all the errors have converged. Processing returns to step S10 in cases in which one or other of the errors has not converged, however the training processing is ended in cases in which all the errors have converged.

Next, description follows regarding the detection processing illustrated in Fig. 13.

At step S30 the compression section 12 reads the target image and the text analysis section 16 reads the target text. Next, at step S32 the compression section 12 and the image analysis section 14 convert the target image into an image vector. Next, at step S34 the text analysis section 16 converts the target text into a text vector. Note that the processing of step S32 may be executed in parallel to the processing of step S34.

Processing similar to that of step S16 to step S22 of the training processing is executed in the following step S36 to step S42 so as to acquire the correspondence estimation result and the position estimation result. Next at step S44, based on the correspondence estimation result and the position estimation result, the output section 26 generates and outputs a detection result image in which the estimation results are overlaid on the target image, and then ends the detection processing.

As described above, the object detection device according to the present exemplary embodiment converts an image into an image vector so as to contain information related to an area of an object in an input image. The object detection device converts a text into a text vector so as to contain information related to an order of appearance in the text of one or more word strings indicating detection target objects contained in the input text. The object detection device reflects the text vector in the initial value token corresponding to the detection target objects, and then generates the area feature token in which the image vector has been reflected after the text vector has been reflected therein. The object detection device estimates whether the features indicated in the area feature token correspond to the detection target object appearing at which number place in the text, and estimates a position of the detection target object in the image. In this manner, the analysis of the text information and the analysis of the image information expressing detection targets are separated from each other, and moreover the phase of reflecting text information in the token and the phase of reflecting image information therein are separated from each other. The present exemplary embodiment is thereby able to reduce the computational load, for detecting an object designated by text in an image without pre-defining categories of detection target objects, which was hitherto concentrated during merging the text information and the image information in related technology.

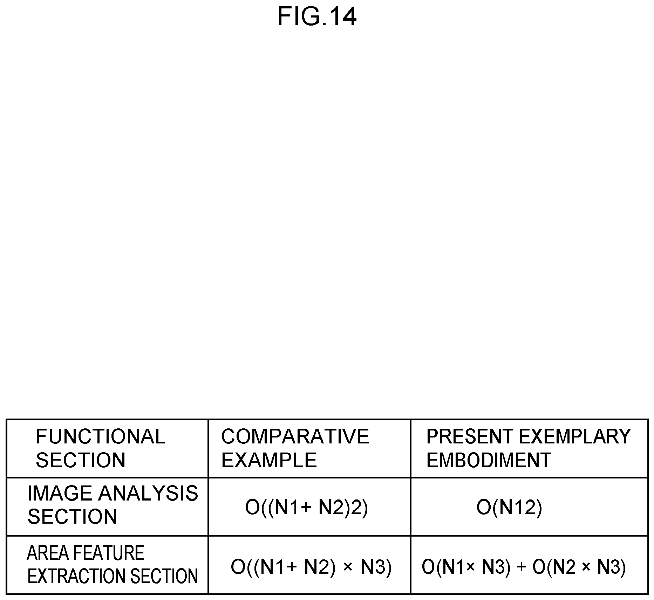

Next, explanation follows regarding the advantageous effects of computational load reduction. The computation volume of the image analysis section and the area feature extraction section is, as illustrated in Fig. 14, in the main proportional to the square of the total number of inputs. The Comparative Example in Fig. 14 is an example of the technology disclosed in "MDETR -- Modulated Detection for End-to-End Multi-Modal Understanding", as listed above. In the Comparative Example, processing equivalent to that of the image analysis section is processing to extract features of an image utilizing text information, and the processing equivalent to that of the feature extraction section is processing to reflect the extracted features in the token. Moreover, the number of individual image vectors input to the image analysis section is N1 (equivalent to the number of pixels of the compressed image), the number of individual text vectors input to the area feature extraction section is N2 (equivalent to the number of word strings indicating detection target objects), and the number of elements of the token input to the area feature extraction section is N3.

Say, for example, N1 = 100, N2 = 10, and N3 = 5, then the computation volume of the image analysis section and the area feature extraction section in the Comparative Example and the present exemplary embodiment are as set out below.

### Comparative Example:

| | |
|---|---|
| image analysis section | (100 + 10)² = 12100 |
| area feature extraction section | (100 + 10) × 5 = 550 |
| total | 12650 |

### Present Exemplary Embodiment:

| | |
|---|---|
| image analysis section | 100² = 10000 |
| area feature extraction section | 100 × 5 + 10 × 5 = 550 |
| total | 10550 |

Namely, a ratio therebetween is 12650/10550 ≈ 1.2, and the present exemplary embodiment is accordingly able to reduce the computation volume by about 20% compared to the Comparative Example.

Note that although the exemplary embodiment described above describes a configuration in which both the training processing and the detection processing are implementable by a single computer, there is no limitation thereto. A training device including the functional sections other than the output section of the above exemplary embodiment, and a detection device including the functional sections other than the machine learning section of the above exemplary embodiment, may be respectively implemented by separate computers.

Moreover, although the exemplary embodiment described above describes an embodiment in which the object detection program is pre-stored (installed) in the storage section, there is no limitation thereto. The program according to the technology disclosed herein may be provided in a format stored on a storage medium such as a CD-ROM, DVD-ROM, USB memory, or the like.

## Claims

1. An object detection program that causes a computer to execute processing comprising:
converting an input image into a first vector such that information related to an area of an object in the image is contained in the first vector;
converting input text into a second vector such that information related to an order of appearance in the text of one or more word strings each indicating a detection target object included in the text is contained in the second vector;
generating a third vector in which the first vector and the second vector have been reflected in a vector of initial values corresponding to detection target objects; and
estimating whether or not a feature indicated by the third vector corresponds to a detection target object that appears at which number place in the text, and estimating a position of the detection target object in the image.

2. The object detection program of claim 1, wherein converting the input image into the first vector includes using a compressor to generate a first intermediate vector of elements that are feature values held by each pixel of a compressed image resulting from compressing the image, and using an analysis model generated in advance by machine learning so as to convert the first intermediate vector into the first vector including areas of respective objects contained in an image as separable features.

3. The object detection program of claim 1 or claim 2, wherein the processing to generate the third vector includes:
generating a second intermediate vector by adding, to the initial value vector, a vector product resulting from the second vector being multiplied by a first coefficient computed in advance by machine learning; and
a specific number of times of repeatedly executing processing to generate a third intermediate vector by adding, to the second intermediate vector, a vector product resulting from the first intermediate vector being multiplied by a second coefficient computed in advance by machine learning so as to generate the third vector.

4. The object detection program of any one of claim 1 to claim 3, wherein:
estimating whether or not a feature indicated by the third vector corresponds to a detection target object that appears at which number place in the text is estimation performed using a first estimation model generated in advance by machine learning so as to output an estimation result as to whether or not there is a correspondence to the detection target object appearing at which number place in the text when input with the third vector; and
estimating a position of the detection target object is estimation performed using a second estimation model generated in advance by machine learning so as to output an estimation result of the position of the detection target object when input with the third vector.

5. The object detection program of claim 2, further comprising using training images, training texts, and correct answers of orders of appearance in the training texts of word strings indicating objects contained in the training texts to generate the analysis model by executing machine learning so as to minimize error between the correct answers and estimation results.

6. The object detection program of claim 3, further comprising computing the first coefficient and the second coefficient by using training images, training texts, and correct answers of orders of appearance in the training texts of word strings indicating objects contained in the training texts to execute machine learning so as to minimize error between the correct answers and estimation results.

7. The object detection program of claim 4, further comprising using training images, training texts, and correct answers of orders of appearance in the training texts of word strings indicating objects contained in the training texts to generate the first estimation model and the second estimation model by executing machine learning so as to minimize error between the correct answers and estimation results.

8. An object detection device comprising:
an image analysis section that converts an input image into a first vector such that information related to an area of an object in the image is contained in the first vector;
a text analysis section that converts input text into a second vector such that information related to an order of appearance in the text of one or more word strings each indicating a detection target object included in the text is contained in the second vector;
an area feature extraction section that generates a third vector that reflects the first vector and the second vector in a vector of initial values corresponding to detection target objects; and
an estimation section that estimates whether or not a feature indicated by the third vector corresponds to a detection target object that appears at which number place in the text, and estimates a position of the detection target object in the image.

9. The object detection device of claim 8, wherein
the image analysis section converts the image into the first vector using a compressor to generate a first intermediate vector of elements that are feature values held by each pixel of a compressed image resulting from compressing the image, and using an analysis model generated in advance by machine learning so as to convert the first intermediate vector into the first vector including areas of respective objects contained in an image as separable features.

10. The object detection device of claim 8 or claim 9, wherein the area feature extraction section:
generates a second intermediate vector by adding, to the initial value vector, a vector product resulting from the second vector being multiplied by a first coefficient computed in advance by machine learning; and
repeatedly executes processing a specific number of times to generate a third intermediate vector by adding, to the second intermediate vector, a vector product resulting from the first intermediate vector being multiplied by a second coefficient computed in advance by machine learning so as to generate the third vector.

11. The object detection device of any one of claim 8 to claim 10, wherein the estimation section:
performs estimation using a first estimation model generated in advance by machine learning so as to output an estimation result as to whether or not there is a correspondence to the detection target object appearing at which number place in the text when input with the third vector; and
performs estimation using a second estimation model generated in advance by machine learning so as to output an estimation result of the position of the detection target object when input with the third vector.

12. The object detection device of claim 9, further comprising a machine learning section that uses training images, training texts, and correct answers of orders of appearance in the training texts of word strings indicating objects contained in the training texts to generate the analysis model by executing machine learning so as to minimize error between the correct answers and estimation results.

13. The object detection device of claim 10, further comprising a machine learning section that uses training images, training texts, and correct answers of orders of appearance in the training texts of word strings indicating objects contained in the training texts to compute the first coefficient and the second coefficient by executing machine learning so as to minimize error between the correct answers and estimation results.

14. The object detection device of claim 11, further comprising a machine learning section that uses training images, training texts, and correct answers of orders of appearance in the training texts of word strings indicating objects contained in the training texts to generate the first estimation model and the second estimation model by executing machine learning so as to minimize error between the correct answers and estimation results.

15. An object detection method in which processing is executed by a computer, the processing comprising:
converting an input image into a first vector such that information related to an area of an object in the image is contained in the first vector;
converting input text into a second vector such that information related to an order of appearance in the text of one or more word strings each indicating a detection target object included in the text is contained in the second vector;
generating a third vector in which the first vector and the second vector have been reflected in a vector of initial values corresponding to detection target objects; and
estimating whether or not a feature indicated by the third vector corresponds to a detection target object that appears at which number place in the text, and estimating a position of the detection target object in the image.
